# EUROPEAN PATENT SPECIFICATION

(11) **EP 2 113 105 B1**
(45) Date of publication and mention of the grant of the patent: **05.10.2011**
(21) Application number: 07701825.7
(22) Date of filing: 23.02.2007
(51) Int. Cl.: G06F 17/00, G06F 15/02, G06F 3/00, H04M 19/04

(54) **TEMPORARY NOTIFICATION PROFILE SWITCHING ON AN ELECTRONIC DEVICE**
TEMPORÄRER BENACHRICHTUNGSPROFILWECHSEL AUF EINEM ELEKTRONISCHEN GERÄT
COMMUTATION ENTRE PROFILS DE NOTIFICATION TEMPORAIRES SUR UN DISPOSITIF ÉLECTRONIQUE

(43) Date of publication of application: 04.11.2009
(73) Proprietor: RESEARCH IN MOTION LIMITED, Waterloo, Ontario N2L 3W8 (CA)
(72) Inventor: MAY, Darrell, Reginald, Waterloo, Ontario N2V 2K6 (CA); HARDY, Michael, Thomas, Waterloo, Ontario N2T 2J8 (CA)
(74) Representative: Patel, Binesh
(86) International application number: PCT/CA2007/000288
(87) International publication number: WO 2008/101312

(56) References cited:
- US-A1- 2005 186 977
- 'Microsoft Windows Mobile 5.0 Reviewers Guide for Smartphones', [Online] January 2006, XP008138018 Retrieved from the Internet: <URL:http://www.microsoft.com/presspass/new sroom/mobile/docs/smartphoneRGFINAL.doc>

## Description

### FIELD OF THE DISCLOSURE

This disclosure relates generally to electronic devices and, more particularly, to electronic devices having a plurality of user notification profiles.

### BACKGROUND

Mobile electronic devices of various types are known, for example personal digital assistants (PDAs), cellular telephone devices of various kinds including various types of 'smart' phones incorporating features of PDAs (e.g., resident applications such as calendar applications, contacts management and loadable custom applications of various types), handheld computers, pocket organizers, wireless pagers, non-cellular wireless telephones, various handheld electronic game machines, and other varieties of handheld and portable electronic devices.

It is known for various types of mobile electronic devices to implement auditory, visual and vibratory means of notifying a device user of the occurrence of an event. Such events include, among others, an incoming telephone call, a scheduled calendar event (such as a meeting), an incoming new email message, a new text message, receipt of a new wireless pager message, and other events requiring notification of the user. It is known for PDAs and cellular telephone devices to implement a plurality of user-selectable standard profiles to configure the behavior of the device. Of particular interest to this discussion are user-selectable notification profiles that include settings to configure the event-notification behavior of the device. For example, cellular telephones are known to have various standard as well as user-loadable ring tones, non-auditory or silent notification means, including vibratory notification and visual notification such as a flashing display illumination or other flashing visual means. Some profile settings may additionally affect the audio volume setting of a ring tone or other audible notification, the intensity and on/off duty cycle of a vibrating alert, as well as whether incoming calls are to drop directly to voice mail rather than notify the user. It is known for some cellular telephone devices to have profile settings for enabling a feature in which a short message service (SMS) text message template is silently and automatically generated back to the caller with a message similar to "I'll call you later" rather than disturbing the device user with an audible alert.

US 2005/0186977 A1 discloses a mobile device including a component to automatically switch between user notification profiles upon the happening of a switching condition defined in response to time or location information or both.

There is a need for an improved method and system for managing selection and use of user notification profiles on electronic devices which employ a plurality of user notification profiles.

### SUMMARY

According to one example embodiment is a method for automated switching of notification profiles on a mobile electronic device having a plurality of different notification profiles each specifying event notification behavior for the mobile electronic device. The method comprises: receiving an instruction in a signal transmitted to the mobile electronic device through a communications interface to switch a first notification profile to specify event notification behavior for the mobile electronic device, the first notification profile having a specified expiration time; switching to the first notification profile in response to receiving the instruction; monitoring for expiration of the first notification profile in dependence on the expiration time; and switching, upon expiration of the first notification profile, to a second notification profile to specify event notification behavior for the mobile electronic device.

According to another example embodiment is a mobile electronic device having an event notification indicator for indicating the occurrence of an event to a user of the device, the device being switchable between a first notification profile having a specified expiration time and a second notification profile, the first and second notification profiles respectively specifying a first and second behavior of the event notification indicator. The device is configured for switching to the first notification profile in response to receiving an instruction in a signal transmitted to the mobile electronic device through a communications interface on the mobile electronic device to switch to the first notification profile, monitoring for expiration of the first notification profile in dependence on the expiration time, and then switching, upon expiration of the first notification profile, from the first expiration profile to the second notification profile.

### BRIEF DESCRIPTION OF THE DRAWINGS

The drawings show example embodiments of the invention; however, the disclosure is not limited to the precise arrangement shown in the drawings.

Figure 1 is a front or plan view, in diagrammatic form, of an example of a mobile electronic device to which the embodiments described herein may be applied.

Figure 2 shows an example of a user interface displayed on a screen of the device.

Figures 3A to 3C show further examples of a user interface displayed on a screen of the device.

Figure 4 illustrates a user interface for setting a temporary notification profile duration.

Figure 5 illustrates a user interface screens displaying a list of notification profiles.

Figures 6A-6D illustrate user interface screens for configuring notification profiles on the device of Figure 1.

Figure 7 is a flowchart of a method for manually switching a mobile electronic device to a temporary notification profile.

Figure 8 is a flowchart of a method for monitoring a temporary notification profile for timed expiration.

Figure 9 is an example expiration notification menu for a temporary notification profile.

Figure 10 illustrates a user interface screen for setting a calendar event with a temporary notification profile.

Figure 11 is a flowchart of a method for switching a mobile electronic device to a temporary notification profile in response to the start of a scheduled calendar event.

Figure 12 is a block diagram of a mobile electronic device in which the methods of the present application may be implemented.

### DETAILED DESCRIPTION

The present disclosure is not limited to the presented details of the construction, materials and embodiments as illustrated in the accompanying drawings, as the disclosed concepts are clearly capable of other embodiments and of being practiced and realized in various ways by applying the teachings presented herein.

Existing mobile electronic devices lack a convenient automated means of switching profiles. For example, during a meeting or at the theater, it is appropriate to change the profile on a cellular phone or a PDA to a silent profile so that incoming cellular calls, timed events or other notifications do not disturb others. Users of existing devices typically must manually change the current notification profile to a silent or a vibrate profile, for example, and then remember to change the profile back to a more usable auditory profile after the meeting, dinner or other event is over. Changing notification profiles is a nuisance. Often the user of a mobile electronic device might forget to set the profile to a silent profile when attending a schedule meeting or function, thereby disturbing others and causing a distraction. More so, it is frequently the case that the mobile electronic device user may forget to return the event-notification profile to a standard auditory profile after the meeting is over and, therefore, may fail to notice or be notified of important incoming calls or scheduled meetings.

Accordingly, there are limitations and drawbacks in the present state of the art of changing the notification profiles of mobile electronic devices. Example embodiments described herein relate to temporarily switching the notification profile of the mobile electronic device to a more appropriate profile (for example to a less distracting profile for meetings and the like) while at the same time limiting the activation period for the temporary profile, for instance to the duration of an event, after which the mobile electronic device automatically returns to the profile which was active at the time the temporary profile was enabled.

In at least some example embodiments, a mobile electronic device has a calendar program associated with the device, and the calendar program is adapted for the scheduling of meetings and other scheduled, time-bound events wherein the handheld device has a notification means controlled by the notification profiles discussed earlier, such as auditory, vibratory, or visual alert means. Varieties of handheld electronic devices with a calendar program and notification means are presently known in the art. For certain events which may be scheduled into the calendar program, it is appropriate to change the notification profile to a silent or vibratory profile for the duration of the event. Needs such as this are met by the present disclosure by providing a means of temporarily and automatically switching the profile of the device to a more appropriate and less distracting profile during such events and then automatically returning the device to the profile in use before the profile was automatically switched.

In example embodiments, there is described a mobile electronic device with the ability to use a selected notification profile, to enable it as a temporary notification profile, and then to automatically switch back to the previous profile after a user-configured elapsed time period or at a user-configured time and date. When integrated with the calendar and event notifications of handheld devices so equipped, the electronic device has the ability to associate temporary notification profiles with a subset of or all calendar events in advance of the event, and thus is adapted to automatically switch the device to user-selected temporary profiles during respective calendar-recorded events and automatically return the profile to the previous profile after the event has ended, removing this burden from the device user.

In some embodiments, the mobile electronic device that notifies the user when the configured activation period for the temporary notification profile has expired and provides the user the option of extending the activation period if desired, and in some embodiments, provides the user with the option of changing the temporary profile to being non-expiring, in which case the profile does not expire after the configured activation period expires. In various embodiments, the mobile electronic device is provided with a method to cancel an active temporary notification profile when a user manually selects and activates another notification profile.

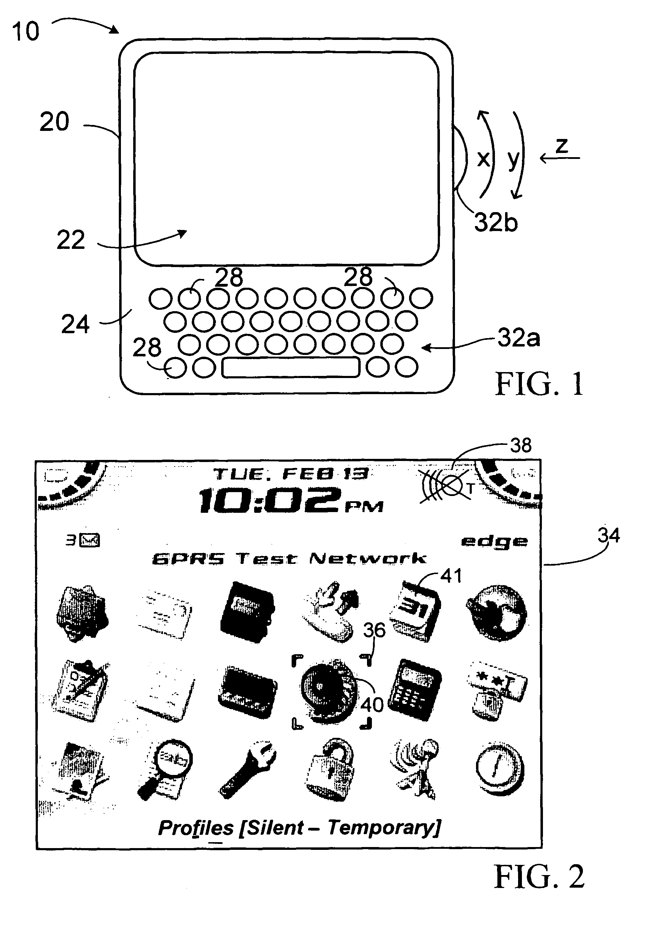

With reference now to Figure 1, in some example embodiments, the components and subsystems of mobile device 10 are housed within a rigid case 20 that is configured to be held with one or two hands while the mobile device 10 is in use. The case 20 may be a single housing, or in some embodiments, could include parts that are pivotally or slidably connected together. The mobile device 10 is, in some examples, small enough to fit inside a standard purse or coat pocket, be clipped to a belt, and/or be mounted on a belt-worn holster. In some embodiments, the device 10 may be configured as a device that includes a component that is secured to the body of the user, for example, mounted by a strap to the user's arm or mounted in or to the user's ear. In the illustrated embodiment, alphanumeric keyboard or keypad 32a is horizontally positioned symmetrically between a left edge and a right edge of a face 24 of the mobile device 10. The keyboard 32a includes several keys 28 for user input of displayable numbers, letters or other characters.

The illustrated mobile device 10 also includes a thumbwheel 32b that can be rotated upwards towards an upper end of the device or downwards towards a bottom end of the device, as indicated by the arrows x and y respectively. Rotation is about an axis perpendicular to the face 24 of the mobile device 10. In the illustrated example, the thumbwheel 32b protrudes through an opening that is provided through a side of the housing case 20 so as to be adapted for manipulation by a thumb (or other hand digit) of a user of the mobile device 10. In addition to being rotatable, the illustrated thumbwheel 32b can also be depressed inwardly as indicated by arrow z. In some embodiments, other input interfaces can be used in place of or in addition to thumbwheel 32b for navigational and selection inputs, such as a track ball or multi-directional key on the front of the device 10, or a touch screen interface for example.

As shown in Figure 2, in one example embodiment, a graphical user interface 34 is presented on screen 22 that includes a list of user selectable menu items. In the interface 34 shown in Figure 2, the menu items take the form of an array of icons through which a selection marker such as a caret 36 can be moved by rotating thumbwheel 32b (or using another navigation input interface). A user can select the menu item or icon that is focused by the caret 36 by depressing thumbwheel 32b or other suitable selection input. At least some of the selectable menu items are associated with a function or set of functions of the device, and in Figure 2, a user selectable menu item (icon 40) that is associated with a device function that allows user notification profiles for the device 10 to be set is focused by caret 36. Also shown in Figure 2 in a status bar area of the interface is a graphical image 38 that represents the current notification profile that is active for the device - in figure 2, the image 38 indicates that a silent profile has been temporarily applied). Additionally, in at least some example embodiments, when the an icon in interface 34 is focused by caret 36, text describing the associated function and a status of that function appears in a further area of the screen, as illustrated by the phrase "Profiles (Silent- Temporary)" in the example shown in Figure 2.

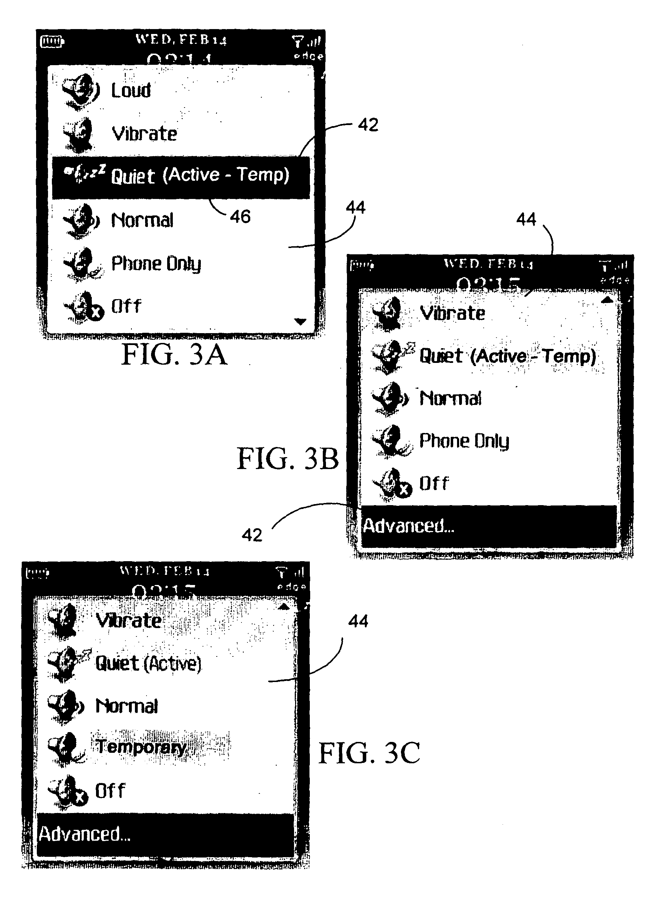

Selection by the user of the "Profiles" menu item 40 results in a notification profile selection list 44 of user selectable notification profiles being displayed on device screen 22, as illustrated by the scrollable list shown in Figures 3A and 3B. In the illustrated example, the list 44 includes user selectable notification profile options such as "Loud", "Vibrate", "Silent", "Normal", "Phone Only", and "Off". In Figure 3A, an on-screen selection indicator 42 highlights the profile option "Silent". The selection indicator 42 can be scrolled through the list in response to user inputs and used to select a notification profile from the various options. In Figure 3B, the selection indicator 42 is located on an "Advanced..." menu item that allows notification characteristics associated with each of the notification profiles to be configured by the user of the device. In the notification profile selection list 44 illustrated in Figure 3A, a status indicator 46 ("Active-Temporary") is displayed beside the currently active notification profile to indicate which of the notification profiles is currently active, and if the notification profile has been selected on a temporary basis (as illustrated by the phrase "temp").

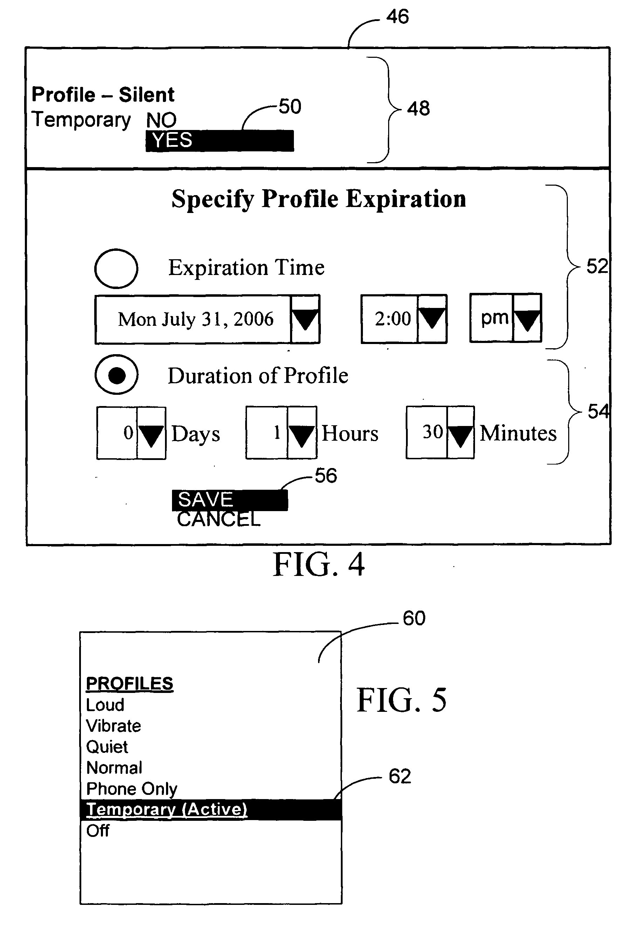

In one example embodiment, as indicated in Figure 4, when a user selects one of the profiles options from list 44 (for example, "Loud", "Vibrate", "Silent", "Normal", "Phone Only", or "Off") the user is presented with a dialog box 46 that allows the user to set the selected profile as a temporary profile. Although in many cases, the user will desire to select a discrete notification behavior profile as the temporary profile (for example "Vibrate" or "Silent") to avoid disturbing others in a meeting or movie theatre, etc., there may also be situations in which the user wants to temporarily use a less discrete notification behavior such as would be associated with a "Loud" profile.

In the illustrated example, the dialog box 46 includes a display area 48 in which a selection marker 50 can be moved between "Yes" and "No" options to set the selected user notification profile as a temporary selection or not. In the event that the user elects the "No" option, then the selected notification profile is set as the current notification profile for the device for indefinite use (for example, until the user selects a different notification profile), and the displayed user interface will return to a home screen (for example interface 34). However, in the event that the "Yes" option is selected, the user will be presented with options for setting an expiration time for the selected notification profile, as represented in areas 52 and 54 of interface 46. The user can navigate through and set the various fields and options represented in areas 52 and 54 to specify either an absolute clock time at which the temporary notification profile should expire, or a time duration after which the temporary notification profile should expire. The fields and options presented in areas 52 and 54 can in some example embodiments be pre-populated with default values that can be user configured. For example, the interface may by default be presented with the "Duration" option highlighted, with a set duration of 2 hours. Once the options information presented in areas 52 and 54 is satisfactory to the device user, the user can select a "Save" option using an on screen indicator 56 to implement the selected temporary notification profile until the specified expiry time occurs. In at least some example embodiments, the notification profile used by the device will revert automatically back to the most recently previously used notification profile upon expiry of the temporary notification profile.

In the example embodiment described above, any of the notification profiles shown in Figure 3A or 3B can be selected for use either as a temporary or non-temporary profile. However, as illustrated in Figure 3C, in at least one example embodiment a user selectable "Temporary" notification profile is included directly in the profile options list 44 (for example the list could include: "Loud", "Vibrate", "Silent", "Normal", "Phone Only", "Temporary" or "Off"), rather than or in addition to having a "temporary" option interface 46 come up upon user selection of one of the other notification profiles. Upon user selection of the "Temporary" profile option from options list 44, the user is presented with an interface screen having time duration selection options similar to those shown in areas 52 and/or 54 of interface 46.

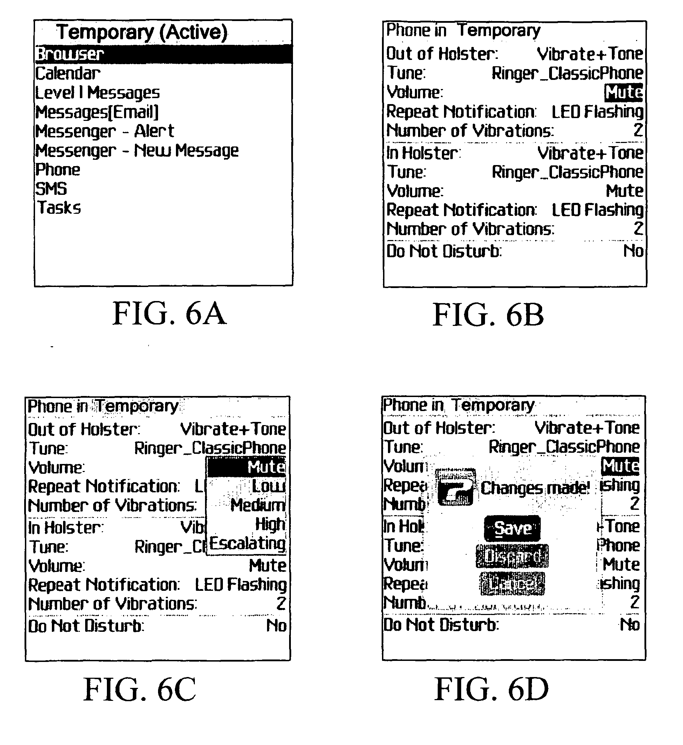

In example embodiments, the "Advanced..." option in notification profiles option list 44 links to interface screens that allow the user to set or change the device notification behavior associated with each of the available notification profiles. By way of example, as illustrated in Figure 5, user selection of the "Advanced..." option results in a user interface screen 60 listing the available notification profiles, from which the user can select (using a selection marker 62) a notification profile to modify the notification behavior associated with the notification profile. Upon selection of one of the notification profiles (for example the "Temporary" profile), the user is presented with a further user interface screen such as shown in Figure 6A which identifies a plurality of communications related, calendar related and task related "events" for which a notification may be issued by the device, including for example "Browser" (for notifying the device user of an incoming communication event received through the Browser), "Calendar" (for notifying the device user of an event scheduled in an electronic calendar), "Level 1 Messages", " Messages[Email]" (for notifying the device user of a newly received email), "Messenger-Alert" (for notifying the device user of a newly received alert); "Messenger - New Message" (for notifying the device user of a newly received instant message), "Phone" (for notifying the device user of a new incoming phone call), "SMS" (for notifying the device user of a newly received SMS text message), and "Tasks" (for notifying the device user of a scheduled task event). In order to configure the notification that is issued by the device 10 for a particular event for the selected notification profile (Temporary in the illustrated embodiment), the user can select a desired event from the list shown in the interface of Figure 6A and then be presented with a set of configurable notification behavior options as illustrated in Figure 6B. As indicated at the top of the display screen in Figure 6B, the interface shown in Figure 6B allows the user to set notification behavior options for a "Phone" event (e.g. incoming phone call) for the "Temporary" profile. Among the selectable notification options are whether the device should ring, vibrate, or vibrate and ring, the volume of any ring, the ring tone, and the number of any vibrations. Furthermore, each of these behavior options can be specified for the device in an "in-holster" state and in an "out-of holster" state, which can be useful for electronic devices that are typically carried on a belt mounted holster, for example. Figure 6C illustrates how drop-down menus can be used in some example embodiments to set the various notification options for a notification event for a notification profile. Figure 6D illustrates a dialog box for saving changes made to the various notification behavior options for a notification event for a notification profile. Using interfaces such as those shown in Figures 5 and 6A-6D, the notification behavior for each type of notification event can be configured for each notification profile.

In some embodiments, the profile configuration interfaces shown in Figures 6B-6D can include expiration options similar to those shown areas 52 and 54 of interface screen 46, such that when a user selects a notification profile as a temporary profile the expiration time is set based on the values shown in the profile configuration interface. Although Figure 5 shows a specific "Temporary" notification profile, it will be appreciated from the above description that in at least some embodiments the device does not include a dedicated "Temporary", but rather than any of the notification profiles can be selected as temporary profile. It will be appreciated that the user interfaces presented to the user for selecting and setting notification profiles and characteristics associated with such profiles can vary from the example interfaces shown in the drawings and described above, which are provided for illustrative purposes.

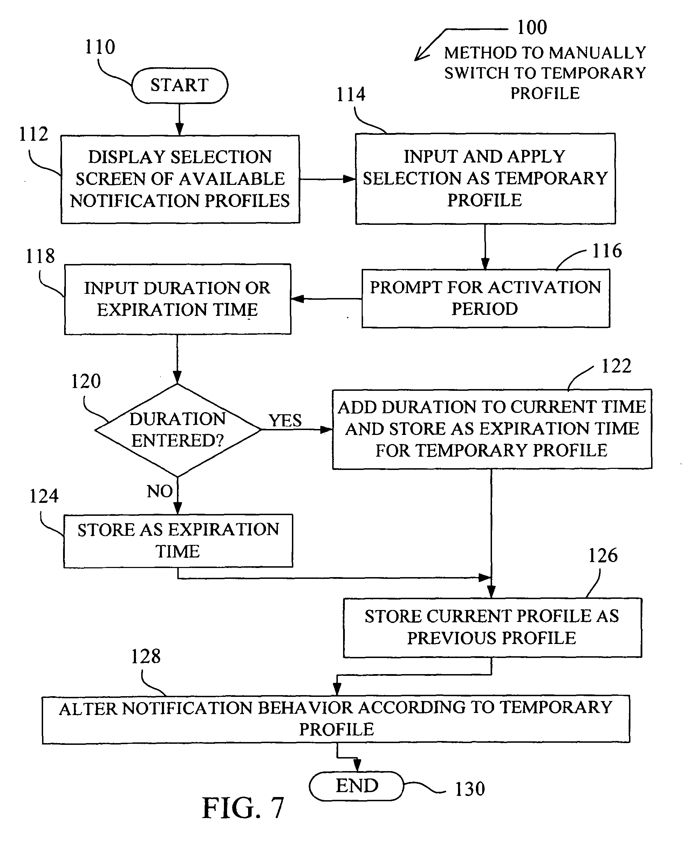

Reference is now made to Figure 7 which is a flowchart of a method 100 for manually switching a mobile electronic device to a temporary notification profile. The method 100 can for example be implemented in combination with the user interfaces shown in Figures 2-6, but could also be implemented using different user interfaces. The method begins in Figure 7 wherein the mobile electronic device 10 has one or more user notification interfaces having visual, auditory and/or vibratory features configured according to a non-expiring notification profile. In example embodiments a non-expiring profile is a device event-notification profile that does not automatically expire in a configured amount of time, including for example the type of profile that is actively controlling the device event-notification behavior when a temporary profile is not active. The subject mobile electronic device 10 has a plurality of notification profiles, some of which are standard profiles provided out of the box, while other profiles may include custom profiles created and configured by the user of the mobile electronic device. Of particular interest to this discussion are user-selectable notification profiles that include settings to configure the event-notification behavior of the device. For example, mobile devices such as cellular telephones are known to have both standard and user-loadable ring tones, as well non-auditory or silent notification means, including vibratory notification and visual notification, such as a flashing display illumination or other flashing visual means.

At block 112, the user of the mobile device has made a menu selection or pressed a function key on the mobile device to select and activate a temporary profile. For example, a menu of available notification profiles on the mobile device which may be enabled as temporary profiles may be displayed on the screen of the device. Profiles may have names such as "Loud", "Silent", "Meeting", "Vibrate", as a partial list of examples. In block 114, the user selects the profile to be activated as a temporary notification profile using the user interface of the mobile device. For example, the user may select one of the entries by touching the displayed entry on the screen (in the case of a touch sensitive screen) or by manipulating cursor control keys or a thumbwheel or trackball on the device to highlight the desired profile name. At block 116, an activation period is associated with the selected temporary profile. When the prompt displays on the mobile electronic device, the expiration time may initially have a default time, as shown in Figure 4. It is anticipated that the user will also have the option, by choosing an onscreen button, for example, to instead enter a duration for the activation period. The duration may also have a default value, for example one hour. The activation period is the time period that the temporary profile is active before the primary profile is automatically resumed. The duration of the activation period is the length of time between initial activation time of the temporary profile and the scheduled deactivation time. For an event such as a movie or the theater, a typical duration may be 2 hours. In the case of a meeting, a fairly typical duration may be 1 hour.

At block 118 the user may accept the default expiration time or duration of the activation period, if any provided, or may enter an expiration time or duration by use of the keyboard and display of the device. It is anticipated that the expiration time may be entered in an absolute time format by which the expiration time is specified by entering the time and optionally, date upon which the temporary notification profile is to expire. If the date is not entered, the date is assumed to be the present date. As an example, if the user is currently at a meeting that is expected to end at 3:30PM, the user can enter an absolute expiration time of 3:30PM (or 15:30 in the 24 hour military format). As will be understood, times and dates may alternatively be chosen from a pull down menu, indicated by arrows in Figure 4. It is anticipated that a duration is entered as hours, minutes, and, optionally, days from the present time. As will be understood, the numbers of days, hours, and minutes may alternatively be chosen from a pull down menu, indicated by arrows in Figure 4. Decision block 120 transfers logic control depending on whether an expiration time or a duration for the activation period was entered. If duration was entered, then at block 122 the duration is added to the current time to obtain the expiration time of the temporary profile in absolute time. If the expiration time was instead entered in absolute format, then block 124 stores the entered absolute expiration time as the expiration time of the temporary profile directly.

At block 126 the current notification profile reference is stored as the previous profile so that the previous profile is known and available to reactivate when the temporary profile expires. At block 128 the user interface is altered according to the setting of the temporary profile selected at block 114. Beginning at this point, the event-notification behavior of the mobile electronic device is controlled by the temporary profile settings, namely the visual, auditory and/or vibratory device settings pertaining to alert notifications. Block 130 ends the method of manually switching a mobile electronic device to a temporary notification profile.

In at least some example embodiments, instructions to switch the mobile electronic device to a temporary notification profile for a specified time period may be provided to the device through signals transmitted to the device through a commutations interface of the device (such as an RF interface, or a wired interface such as a USB connection, for example). For example, the IT administrator for an organization may want to force all mobile devices that are in communication with a WI-FI network to temporarily use a silent notification profile during a time that a presentation is being made to members of the organization.

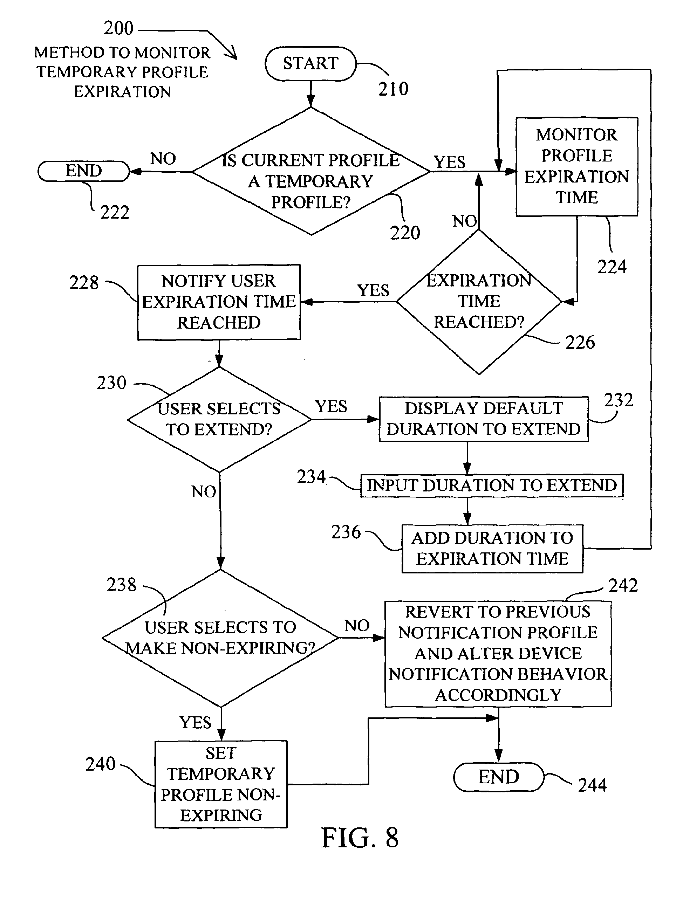

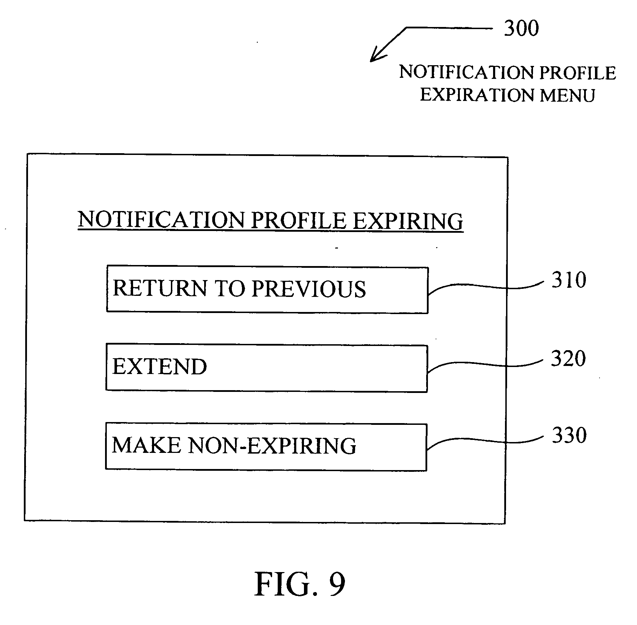

Figure 8 is a flowchart of a method 200 to monitor an active temporary notification profile for expiration and to automatically deactivate the temporary profile at some point in the future. Decision block 220 tests the active or current profile to see if it is a temporary (i.e. time-limited) profile. If the current active profile is not a temporary profile, then the method ends at block 222. At block 224 the expiration time setting of the active temporary notification profile is compared against the current time of the real-time clock of the mobile electronic device. Decision block 226 compares the temporary profile expiration time against the current time provided by the real-time clock of the device. If the expiration time has not been reached, then control transfers to block 224 to continue monitoring the temporary notification profile for expiration. Block 228 is reached when the temporary profile expiration time has been reached. In one example embodiment, block 228 notifies the user of the mobile electronic device that the expiration time has been reached. The notification at block 228 that the temporary notification profile is expiring may be a prompt with a menu as depicted in Figure 9, although this disclosure is not limited to the prompt and menu illustrated. Block 230 is a decision block which tests the user response to the temporary profile expiration notification of block 228, testing whether the user selected to extend the expiration time and thereby extend the activation period of the temporary profile. If the user selects to extend the expiration time, then block 232 displays a prompt for the user to enter a duration by which to extend the activation period. It is anticipated that there may be a default duration initially displayed, for example 10 minutes. At block 234 the duration by which to extend the temporary profile's activation period is entered by the device user. The duration by which to extend the activation period may be entered from a displayed menu having, for example, selections including 10 minutes, 20 minutes, 30 minutes, and 1 hour. Alternatively, the duration by which to extend the temporary profile activation period may be entered directly from the device keyboard. At block 236 the entered duration by which to extend the temporary profile activation period is added to the configured expiration time of the temporary profile activation period to provide a new expiration time in absolute format, and the control transfers to block 224 to monitor the new expiration time of the temporary notification profile for its newly reconfigured timed expiration. In some example embodiments, notification to the user that the profile is expiring may be omitted together, with the device simply reverting back to the previous notification profile without any notice to the user on expiry of the temporary profile. In some embodiments, notification of the expiring profile may be given to the user only for a predetermined duration, after which the device will automatically revert back to the previous notification profile if no user input is received.

Turning again to decision block 230 of the illustrated method 200, if the user did not select to extend the activation period of the temporary notification profile, then decision block 238 tests the user response to the notification of block 228 to see if the device user has selected to make the present temporary profile a non-expiring profile. Block 240 is reached if the user selected to convert the active temporary profile to a non-expiring profile. Block 240 stores the temporary profile as the device's current non-expiring profile, and the method ends at block 244.

At decision block 238, if the device user did not select to make the temporary profile permanent, then at block 242 the device event-notification profile reverts to the previous non-expiring profile that was active before the temporary profile activated (previous profile stored at Figure 7 block 126). The method to monitor an active temporary (or timed) profile for expiration and to deactivate the temporary profile then ends at block 244.

Figure 9 is an example notification profile expiration menu as discussed under Figure 8 block 228. Figure 9 is one example of what may be displayed on the screen of the mobile electronic device when a temporary profile expires. In this example, the user is provided with selectable menu choices including: the option 310 to return to the previous notification profile; the option 320 to extend the temporary profile expiration time, thereby maintaining the temporary profile in control of the user interface for an entered period of additional time; and the option 330 to make the expiring temporary profile the non-expiring profile of the device.

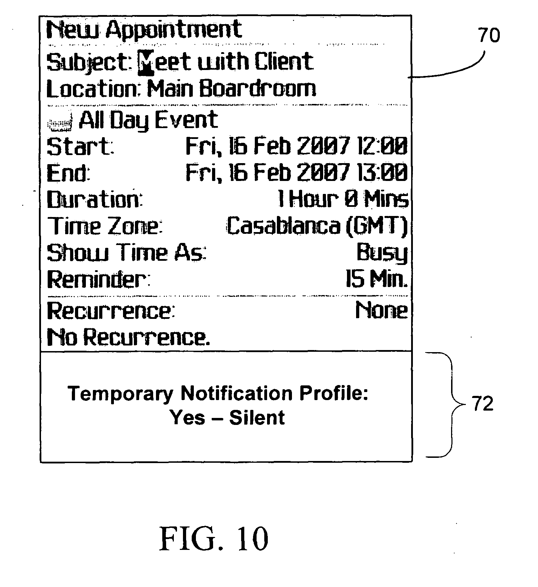

As indicated above, in some example embodiments a temporary notification profile can be associated with a scheduled event in a calendar application such that device 10 is preconfigured to automatically use the temporary notification profile during the duration of a scheduled event. In one example embodiment, the mobile device 10 has running thereon a calendar application having an associated icon or menu item 41 (see Figure 2) that can be selected by a user to display a Calendar interface. Among the interface screens that are associated with the Calendar application are one or more screens that allow a user to schedule an upcoming event. By way of example, Figure 10 illustrates a calendar event entry interface screen 70 that allows a user to enter a day, time, place and subject for a meeting. Included in interface screen 70 is an area 72 that that allows the device user to select whether a temporary notification profile is to be activated during the duration of the scheduled event. By way of example, drop down menus can be presented in area 72 to allow a user to select "Yes" or "No" options regarding the use of a temporary notification profile, and in embodiments where there is not a dedicated temporary profile, options as to which notification profile should be used as the temporary profile (for example: "Loud", "Vibrate", "Silent", "Normal", "Phone Only", or "Off"). In some example embodiments, the temporary profile notification settings for a calendar event can be specified in a meeting request received by the mobile device from a third party, or sent by the mobile device to a third party, such that the person scheduling a meeting or other event can control the notification profiles of mobile devices of other attendees during the scheduled event duration. In at least some example embodiments, when an event request from a third party containing notification profile information is received by the mobile device 10 the user of the device 10 is given an option to accept or deny the use of the temporary notification profile when accepting the event request.

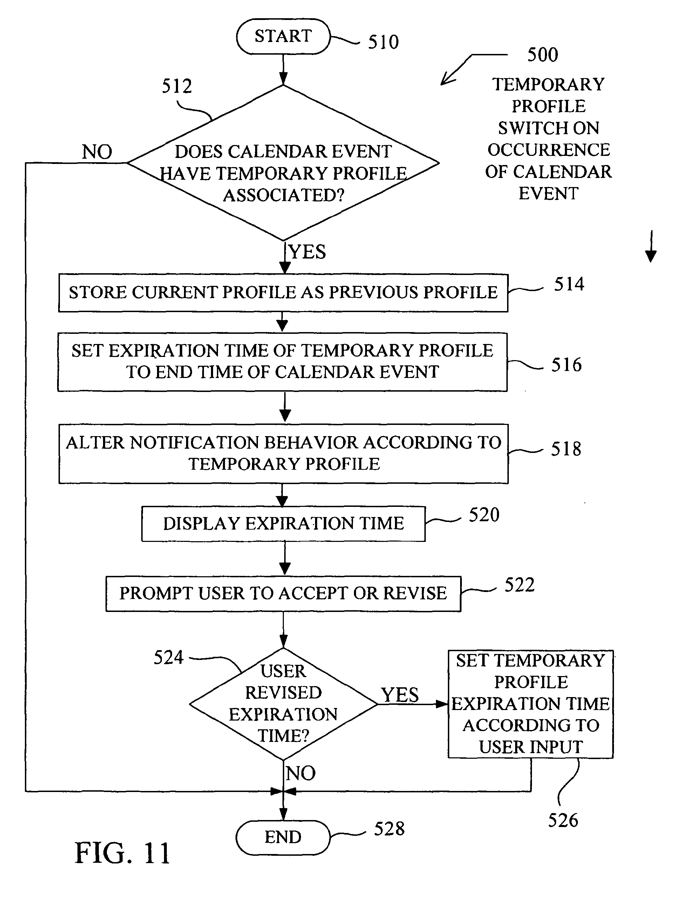

Figure 11 is a flowchart of a method 500 of temporary notification profile switching on a mobile electronic device in response to the start of a scheduled calendar event. The method begins upon the occurrence of a calendar event, for example when the start time of a scheduled meeting is reached. Upon the occurrence of a calendar event, the method is entered at start block 510. Block 512 tests the calendar event to determine if a temporary notification profile is associated with the calendar event. If the calendar event does not have an associated temporary notification profile, the control transfers to block 528 and the method ends. If the calendar event has an associated temporary profile, then control transfers to block 514. In block 514, the current notification profile reference is stored as the previous profile so that the previous profile is known and available to reactivate when the temporary profile expires.

At block 516, the temporary notification profile identified in the calendar event is selected as the device temporary notification profile, and the expiration time of the temporary notification profile is set to the end time of the calendar event. At block 518 the notification behavior of the user interface is altered according to the settings of the temporary profile. Beginning at this point, the event-notification behavior of the mobile electronic device is controlled by the temporary profile settings, namely the visual, auditory and/or vibratory device settings, particularly those corresponding to communication, calendar and or task event notifications. At block 520 the expiration time of the temporary profile is displayed to the user. The expiration time initially defaults to the end time of the calendar event. For example, if the calendar event is a meeting scheduled from 3:00 PM until 4:00 PM, then the expiration time defaults to 4:00PM, and this is the expiration time displayed to the user. At block 522 the user is prompted to accept the displayed temporary profile expiration time or to enter a revised expiration time. If is anticipated that the time and, optionally, date are entered in an absolute time format, i.e., the expiration time is specified by entering the time and, optionally, date upon which the temporary notification profile is to expire.

Continuing with the above example, where the calendar event is the start of a meeting scheduled from 3:00PM until 4:00 PM, the user may elect to revise the expiration time, for example, to 4:05 PM (or 16:05 in the 24-hour format). At block 524 the user response to the prompt is evaluated, and if the expiration time was revised, then control transfers to block 526. If the displayed expiration time was accepted without revision, then the method ends at block 528. Block 526 is reached if the user revised the expiration time of the temporary profile. Block 526 sets the expiration time of the temporary profile according to the user's input, and then transfers control to block 528, where the method ends.

In at least some example embodiments, the temporary profile automatically expires at the end of the scheduled event time without presenting an interface for the user to extend the temporary notification profile.

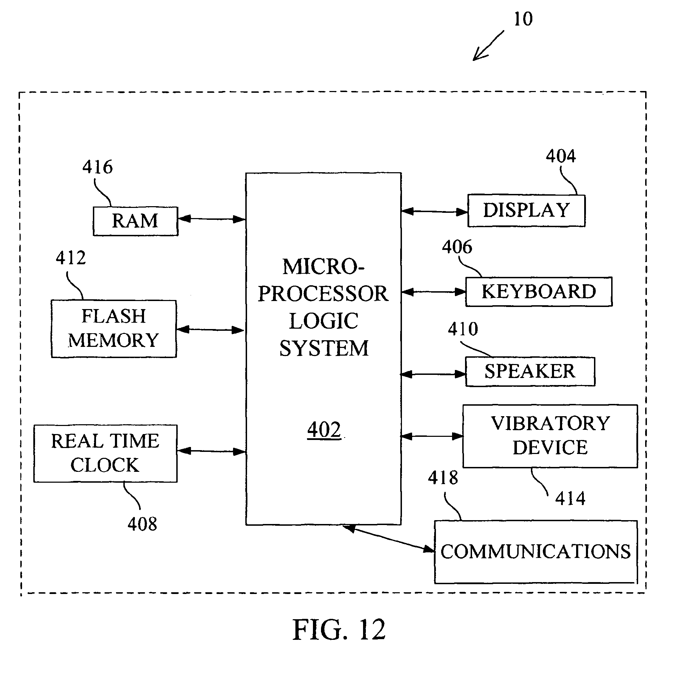

Figure 12 is a block diagram of an example of the mobile electronic device 10 in which the methods of the present application may be implemented. In an example embodiment, mobile electronic device 10 has a controller implemented as microprocessor-based logic system 402 which interfaces to a display screen 404, a keyboard-type input device 406, real-time clock 408 providing current date and time, audio speaker or audio sound generating device 410 for providing an audible event notification, flash memory 412 for non-volatile storage of programs (such as the calendar program as well as operating programs, settings, messaging and browser programs, programs for implementing a phone, a plurality of notification profiles and such), vibratory device 414 for providing a vibrating event notification to a person holding or wearing the mobile electronic device, random access memory (RAM) 416 for storing data generated during device operation and program execution which does not need to be retained when mobile device power is off, and one or more communications subsystem 418 for enabling RF communications between the device 10 and cellular and/or WI-FItype networks. At any given time, the active notification profile controls the behavior of the display (which may also include LED's or other notification lights in addition to a screen), the speaker and the vibratory device.

The discussed construction, illustrations and sequence of operation are for one embodiment, but in no way excludes other embodiments. The operating modes may be changed and enhanced without deviating from the intention of this disclosure.

In the preceding detailed description, reference has been made to the accompanying drawings that form a part hereof and in which are shown by way of illustration specific embodiments in which the invention may be practiced. These embodiments and certain variants thereof have been described in sufficient detail to enable those skilled in the art to practice the invention. It is to be understood that other suitable embodiments may be utilized and that logical, electrical, software, material, and mechanical changes may be made without departing from the scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents as can be reasonably included within the scope of the appended claims.

## Claims

1. A method for automated switching of notification profiles on a mobile electronic device (10) having a plurality of different notification profiles each specifying event notification behavior for the mobile electronic device, the method comprising:
receiving an instruction in a signal transmitted to the mobile electronic device (10) through a communications interface (418) to switch a first notification profile (48) to specify event notification behavior for the mobile electronic device, the first notification profile having a specified expiration time (52);
switching to the first notification profile in response to receiving the instruction;
monitoring for expiration of the first notification profile in dependence on the expiration time; and
switching, upon expiration of the first notification profile, to a second notification profile to specify event notification behavior for the mobile electronic device.

2. The method of claim 1 comprising generating a user notification (300) through an interface (404) of the mobile electronic device when the expiration time has been reached.

3. The method of claim 2 comprising:
determining, after generating the user notification (300) and prior to switching to the second notification profile, if a user input is received indicating the user desires to extend the expiration time, and if so, extending the expiration time.

4. The method of claim 1 wherein monitoring for expiration of the first notification profile comprises:
determining when the expiration time has been reached and then generating a user notification (300) through an interface of the mobile electronic device; and
waiting, after generating the user notification (300), for a user input confirming that the user desires to switch to the second notification profile.

5. The method of claim 1 wherein monitoring for expiration of the first notification profile comprises determining when the expiration time has been reached, and
switching to the second notification profile automatically occurs immediately when the expiration time has been reached.

6. The method of any one of claims 1 to 5 comprising, prior to switching to the first notification profile to specify event notification behavior for the mobile electronic device:
using the second notification profile to specify event notification behavior for the mobile electronic device;
receiving user input to the mobile electronic device selecting the first notification profile to replace the second notification profile and setting the specified expiration time.

7. The method of any one of claims 1 to 5 wherein a calendar program is resident on the device for scheduling events, the method comprising:
receiving through a wireless communications interface of the mobile device the event information, including the information identifying a notification profile to use as the first notification profile, as part of a meeting request initiated by a third party;
storing on the mobile device event information about a scheduled event including an event start time and an event end time; and
prior to switching to the first notification profile, using the second notification profile to specify event notification behavior for the mobile electronic device;
wherein switching to the first notification profile occurs at the event start time and the expiration time is set in dependence on the event end time.

8. The method of claim 7 wherein storing the event information comprises storing information identifying one of a plurality of different notification profiles to use as the first notification profile.

9. The method of any one of claims 1 to 5 comprising, prior to switching to the first notification profile to specify event notification behavior for the mobile electronic device:
using the second notification profile to specify event notification behavior for the mobile electronic device;
receiving instructions through a communications interface of the mobile device to switch from the second notification profile to the first notification profile and setting the specified expiration time.

10. The method of any one of claims 1 to 9 wherein the first notification profile specifies that the mobile electronic device will remain mute when an incoming phone call is received at the electronic mobile device and the second notification profile specifies that the mobile electronic device will issue an audible alert when an incoming phone call is received at the electronic mobile device.

11. A computer-readable medium upon which a plurality of instructions are stored, the instructions for performing the steps of the method of any one of claims 1 to 10.

12. A mobile electronic device (10) having an event notification indicator (404, 410, 414) for indicating the occurrence of an event to a user of the device (10), the device being switchable between a first notification profile having a specified expiration time and a second notification profile, the first and second notification profiles respectively specifying a first and second behavior of the event notification indicator, the device being configured for switching to the first notification profile in response to receiving an instruction in a signal transmitted to the mobile electronic device through a communications interface on the mobile electronic device to switch to the first notification profile, monitoring for expiration of the first notification profile in dependence on the expiration time, and then switching, upon expiration of the first notification profile, from the first expiration profile to the second notification profile.

13. The mobile electronic device (10) of claim 12 wherein the device (10) is configured for generating a user notification (300) when the expiration time has been reached, wherein the user notification (300) prompts the user to indicate if the user desires to extend the expiration time or the user desires to switch to the second notification profile, the device being configured for determining, prior to switching to the second notification profile, (i) if a user input is received at the device indicating the user desires to extend the expiration time, and if so, extending the expiration time, and (ii) if a user input is received at the device indicating the user desires to switch to the second notification profile, and if so, switching to the second notification profile.

14. The mobile electronic device (10) of claim 12 or 13 wherein the event notification indicator includes at least one of an audio speaker (410), a vibratory device (414), and a display screen (404), and types of events for which the behavior of the event notification indicator is specified in the notification profiles includes at least one of an incoming phone call, an incoming email message and a calendar event.

## Patentansprüche

1. Verfahren zum automatisierten Umschalten von Mitteilungsprofilen auf einer mobilen elektronischen Vorrichtung (10) mit einer Vielzahl an verschiedenen Mitteilungsprofilen, die jeweils ein Ereignismitteilungsverhalten für die mobile elektronische Vorrichtung festlegen, wobei das Verfahren Folgendes aufweist:
Empfangen eines Befehls in einem Signal, das an die mobile elektronische Vorrichtung (10) durch eine Kommunikationsschnittstelle (418) übermittelt ist, um ein erstes Mitteilungsprofil (48) zu schalten, um ein Ereignismitteilungsverhalten für die mobile elektronische Vorrichtung festzulegen, wobei das erste Mitteilungsprofil eine festgelegte Ablaufszeit (52) aufweist,
Umschalten auf das erste Mitteilungsprofil als Reaktion auf das Empfangen des Befehls,
Überwachen eines Ablaufens des ersten Mitteilungsprofils in Abhängigkeit von der Ablaufzeit, und
Umschalten nach dem Ablaufen des ersten Mitteilungsprofils auf ein zweites Mitteilungsprofil, um ein Ereignismitteilungsverhalten für die mobile elektronische Vorrichtung festzulegen.

2. Verfahren nach Anspruch 1, mit Erzeugen einer Benutzermitteilung (300) durch eine Schnittstelle (404) der mobilen elektronischen Vorrichtung, wenn die Ablaufzeit erreicht worden ist.

3. Verfahren nach Anspruch 2, mit:
Bestimmen nach Erzeugen der Benutzermitteilung (300) und vor Umschalten auf das zweite Mitteilungsprofil, ob eine Benutzereingabe empfangen wird, die anzeigt, dass der Benutzer die Ablaufzeit zu verlängern wünscht, und wenn ja, Verlängern der Ablaufzeit.

4. Verfahren nach Anspruch 1, wobei das Überwachen des Ablaufens des ersten Mitteilungsprofils Folgendes aufweist:
Bestimmen, wann die Ablaufzeit erreicht worden ist, und dann Erzeugen einer Benutzermitteilung (300) durch eine Schnittstelle der mobilen elektronischen Vorrichtung und
Warten nach Erzeugen der Benutzermitteilung (300) auf eine Benutzereingabe, die bestätigt, dass der Benutzer wünscht, auf das zweite Mitteilungsprofil umzuschalten.

5. Verfahren nach Anspruch 1, wobei das Überwachen auf Ablaufen des ersten Mitteilungsprofils ein Bestimmen, wann die Ablaufzeit erreicht worden ist, aufweist, und
Umschalten auf das zweite Mitteilungsprofil sofort wenn die Ablaufzeit erreicht worden ist automatisch erfolgt.

6. Verfahren nach einem der Ansprüche 1 bis 5, das vor dem Umschalten auf das erste Mitteilungsprofil, um ein Ereignismitteilungsverhalten für die mobile elektronische Vorrichtung festzulegen, Folgendes aufweist:
Verwenden des zweiten Mitteilungsprofils, um ein Ereignismitteilungsverhalten für die mobile elektronische Vorrichtung festzulegen,
Empfangen einer Benutzereingabe an die mobile elektronische Vorrichtung, die das erste Mitteilungsprofil auswählt, um das zweite Mitteilungsprofil zu ersetzen, und die festgelegte Ablaufzeit einstellt.

7. Verfahren nach einem der Ansprüche 1 bis 5, wobei ein Kalenderprogramm auf der Vorrichtung zum Planen von Ereignissen resident ist, wobei das Verfahren Folgendes aufweist:
Empfangen der Ereignisinformation, welche die Information enthält, die ein Mitteilungsprofil identifiziert, um es als das erste Mitteilungsprofil zu nutzen, durch eine Drahtloskommunikations-Schnittstelle der mobilen Vorrichtung als Teil einer Treffanfrage bzw. Meetinganfrage, die von einem Dritten initiiert ist,
Speichern einer Ereignisinformation über ein geplantes Ereignis, die eine Ereignisanfangszeit und eine Ereignisendzeit enthält, auf der mobilen Vorrichtung und
Verwenden des zweiten Mitteilungsprofils vor dem Umschalten auf das erste Mitteilungsprofil, um ein Ereignismitteilungsverhalten für die mobile elektronische Vorrichtung festzulegen,
wobei das Umschalten auf das erste Mitteilungsprofil zur Ereignisanfangszeit erfolgt und die Ablaufzeit in Abhängigkeit von der Ereignisendzeit eingestellt wird.

8. Verfahren nach Anspruch 7, wobei das Speichern der Ereignisinformation ein Speichern von Information aufweist, die ein aus einer Vielzahl von verschiedenen Mitteilungsprofilen identifiziert, um es als das erste Mitteilungsprofil zu verwenden.

9. Verfahren nach einem der Ansprüche 1 bis 5, das vor dem Umschalten auf das erste Mitteilungsprofil, um ein Ereignismitteilungsverhalten für die mobile elektronische Vorrichtung festzulegen, Folgendes aufweist:
Verwenden des zweiten Mitteilungsprofils, um eine Ereignismitteilungsverhalten für die mobile elektronische Vorrichtung festzulegen,
Empfangen von Befehlen durch eine Kommunikationsschnittstelle der mobilen Vorrichtung, um vom zweiten Mitteilungsprofil auf das erste Mitteilungsprofil zu schalten, und Einstellen der festgelegten Ablaufzeit.

10. Verfahren nach einem der Ansprüche 1 bis 9, wobei das erste Mitteilungsprofil festlegt, dass die mobile elektronische Vorrichtung stumm bleiben wird, wenn ein eingehender Telefonanruf an der elektronischen mobilen Vorrichtung empfangen wird, und das zweite Mitteilungsprofil festlegt, dass die mobile elektronische Vorrichtung eine hörbare Warnung ausgeben wird, wenn ein eingehender Telefonanruf an der elektronischen mobilen Vorrichtung empfangen wird.

11. Computerlesbares Medium, auf dem eine Vielzahl an Befehlen gespeichert ist, wobei die Befehle zum Durchführen der Schritte des Verfahrens nach einem der Ansprüche 1 bis 10 dienen.

12. Mobile elektronische Vorrichtung (10) mit einem Ereignismitteilungsanzeiger (404, 410, 414) zum Anzeigen des Erfolgens eines Ereignisses an einen Benutzer der Vorrichtung (10), wobei die Vorrichtung zwischen einem ersten Mitteilungsprofil, das eine festgelegte Ablaufzeit umfasst, und einem zweiten Mitteilungsprofil umschaltbar ist, wobei das erste und das zweite Mitteilungsprofil jeweils ein erstes bzw. ein zweites Verhalten des Ereignismitteilungsanzeigers festlegen, wobei die Vorrichtung konfiguriert ist, auf das erste Mitteilungsprofil als Reaktion auf Empfangen eines Befehls in einem Signal umzuschalten, das durch eine Kommunikationsschnittstelle auf der elektronischen Vorrichtung an die mobile elektronische Vorrichtung übermittelt ist, um auf das erste Mitteilungsprofil umzuschalten, ein Ablaufen des ersten Mitteilungsprofils in Abhängigkeit der Ablaufzeit zu überwachen und dann nach dem Ablaufen des ersten Mitteilungsprofils vom ersten Ablaufprofil auf das zweite Mitteilungsprofil umzuschalten.

13. Mobile elektronische Vorrichtung (10) nach Anspruch 12, wobei die Vorrichtung (10) zum Erzeugen einer Benutzermitteilung (300) konfiguriert ist, wenn die Ablaufzeit erreicht worden ist, wobei die Benutzermitteilung (300) den Benutzer auffordert anzugeben, ob der Benutzer, die Ablaufzeit zu verlängern, wünscht oder ob der Benutzer, auf das zweite Mitteilungsprofil umzuschalten, wünscht, wobei die Vorrichtung dazu konfiguriert ist, vor dem Umschalten auf das zweite Mitteilungsprofil zu bestimmen, (i) ob eine Benutzereingabe an der Vorrichtung empfangen ist, die anzeigt, dass der Benutzer, die Ablaufzeit zu verlängern wünscht, und wenn ja, die Ablaufzeit zu verlängern, und (ii) ob eine Benutzereingabe an der Vorrichtung empfangen ist, die anzeigt, dass der Benutzer auf das zweite Mitteilungsprofil umzuschalten wünscht, und wenn ja, auf das zweite Mitteilungsprofil umzuschalten.

14. Mobile elektronische Vorrichtung (10) nach Anspruch 12 oder 13, wobei der Ereignismitteilungsanzeiger mindestens einen Audiolautsprecher (410), eine Vibrationsvorrichtung (414) und/oder einen Anzeigebildschirm (404) enthält und Ereignistypen, für die das Verhalten des Ereignismitteilungsanzeigers in den Mitteilungsprofilen festgelegt ist, mindestens einen eingehenden Telefonanruf, eine eingehende E-Mail-Nachricht und/oder ein Kalenderereignis enthält.

## Revendications

1. Procédé de commutation automatique de profils de notification sur un dispositif électronique mobile (10) possédant une pluralité de profils de notification différents, chacun spécifiant un comportement de notification d'événement pour le dispositif électronique mobile, le procédé comprenant les étapes consistant à :
recevoir une instruction, dans un signal transmis au dispositif électronique mobile (10) via une interface de communication (418), pour commuter un premier profil de notification (48) afin de spécifier un comportement de notification d'événement pour le dispositif électronique mobile, le premier profil de notification ayant un délai d'expiration spécifié (52) ;
commuter sur le premier profil de notification en réponse à la réception de l'instruction ;
surveiller l'expiration du premier profil de notification, sur la base du délai d'expiration ; et
après expiration du premier profil de notification, commuter sur un second profil de notification afin de spécifier un comportement de notification d'événement pour le dispositif électronique mobile.

2. Procédé selon la revendication 1, comprenant l'étape consistant à produire une notification d'utilisateur (300), via une interface (404) du dispositif électronique mobile, lorsque le délai d'expiration a été atteint.

3. Procédé selon la revendication 2, comprenant l'étape consistant à :
après l'étape de production de la notification d'utilisateur (300) et avant l'étape de commutation sur le second profil de notification, déterminer si une entrée de l'utilisateur a été reçue qui indique que l'utilisateur souhaite prolonger le délai d'expiration et, dans ce cas, prolonger le délai d'expiration.

4. Procédé selon la revendication 1, dans lequel l'étape de surveillance de l'expiration du premier profil de notification comprend les étapes consistant à :
déterminer si le délai d'expiration a été atteint, puis produire une notification d'utilisateur (300) via une interface du dispositif électronique mobile ; et
après avoir produit la notification d'utilisateur (300), attendre une entrée de l'utilisateur confirmant que l'utilisateur souhaite commuter vers le second profil de notification.

5. Procédé selon la revendication 1, dans lequel l'étape de surveillance de l'expiration du premier profil de notification comprend l'étape consistant à déterminer quand le délai d'expiration a été atteint ; et
l'étape de commutation vers le second profil de notification se produit automatiquement immédiatement après que le délai d'expiration a été atteint.

6. Procédé selon l'une quelconque des revendications 1 à 5, comprenant, avant l'étape de commutation vers le premier profil de notification pour spécifier le comportement de notification d'événement pour le dispositif électronique mobile, les étapes consistant à :
utiliser le second profil de notification pour spécifier le comportement de notification d'événement pour le dispositif électronique mobile ;
recevoir une entrée de l'utilisateur sur le dispositif électronique mobile, pour sélectionner le premier profil de notification afin de remplacer le second profil de notification et définir le délai d'expiration spécifié.

7. Procédé selon l'une quelconque des revendications 1 à 5, dans lequel un programme d'agenda réside sur le dispositif pour la planification d'événements, le procédé comprenant les étapes consistant à :
recevoir les informations d'événement, via une interface de communication sans fil du dispositif mobile, y compris les informations qui identifient un profil de notification à utiliser comme premier profil de notification, dans le cadre d'une demande de réunion lancée par une tierce partie ;
stocker sur le dispositif mobile des informations d'événement sur un événement planifié, y compris une heure de début de l'événement et une heure de fin de l'événement ; et
avant de commuter sur le premier profil de notification, utiliser le second profil de notification pour spécifier un comportement de notification d'événement pour le dispositif électronique mobile ;
la commutation vers le premier profil de notification se produisant à l'heure de début de l'événement et le délai d'expiration étant fixé en fonction de l'heure de fin de l'événement.

8. Procédé selon la revendication 7, dans lequel l'étape de stockage des informations d'événement comprend l'étape consistant à stocker des informations qui identifient un profil de notification, sur une pluralité de profils de notification différents, à utiliser comme premier profil de notification.

9. Procédé selon l'une quelconque des revendications 1 à 5, comprenant, avant l'étape de commutation vers le premier profil de notification pour spécifier le comportement de notification d'événement pour le dispositif électronique mobile, les étapes consistant à :
utiliser le second profil de notification pour spécifier le comportement de notification d'événement pour le dispositif électronique mobile ;
recevoir des instructions, via une interface de communication du dispositif mobile, afin de commuter entre le second profil de notification et le premier profil de notification, et paramétrer le délai d'expiration spécifié.

10. Procédé selon l'une quelconque des revendications 1 à 9, dans lequel le premier profil de notification spécifie que le dispositif électronique mobile doit rester muet lorsqu'un appel téléphonique entrant est reçu sur le dispositif électronique mobile et le second profil de notification spécifie que le dispositif électronique mobile doit émettre une alerte audible lorsqu'un appel téléphonique entrant est reçu sur le dispositif électronique mobile.

11. Support lisible par ordinateur, sur lequel sont stockées une pluralité d'instructions, les instructions étant destinées à exécuter les étapes du procédé selon l'une quelconque des revendications 1 à 10.

12. Dispositif électronique mobile (10) possédant un indicateur de notification d'événement (404, 410, 414) afin d'indiquer la survenance d'un événement à un utilisateur du dispositif (10), le dispositif pouvant être commuté entre un premier profil de notification ayant un délai d'expiration spécifié et un second profil de notification, les premier et second profils de notification spécifiant respectivement un premier et un second comportement de l'indicateur de notification d'événement, le dispositif étant configuré pour commuter sur le premier profil de notification en réponse à la réception, dans un signal transmis au dispositif électronique mobile via une interface de communication du dispositif électronique mobile, d'une instruction de commuter sur le premier profil de notification, pour surveiller l'expiration du premier profil de notification en fonction du délai d'expiration et puis pour commuter, après expiration du premier profil de notification, entre le premier profil de notification et le second profil de notification.

13. Dispositif électronique mobile (10) selon la revendication 12, le dispositif (10) étant configuré pour produire une notification d'utilisateur (300) lorsque le délai d'expiration a été atteint, dans lequel la notification d'utilisateur (300) invite l'utilisateur à indiquer si l'utilisateur souhaite prolonger le délai d'expiration ou si l'utilisateur souhaite commuter sur le second profil de notification, le dispositif étant configuré pour, avant de commuter sur le second profil de notification, déterminer (i) si une entrée de l'utilisateur a été reçue sur le dispositif pour indiquer que l'utilisateur souhaite prolonger le délai d'expiration et, dans ce cas, pour prolonger le délai d'expiration, et (ii) si une entrée de l'utilisateur a été reçue sur le dispositif pour indiquer que l'utilisateur souhaite commuter sur le second profil de notification et, dans ce cas, pour commuter sur le second profil de notification.

14. Dispositif électronique mobile (10) selon la revendication 12 ou 13, dans lequel l'indicateur de notification d'événement comprend au moins un dispositif choisi parmi un haut-parleur audio (410), un dispositif vibrant (414) et un écran d'affichage (404), et les types d'événements pour lesquels le comportement de l'indicateur de notification d'événement est spécifié dans les profils de notification comprend au moins un événement parmi un appel téléphonique entrant, un message de courriel entrant et un événement de l'agenda.
